# EUROPEAN PATENT SPECIFICATION

(11) **EP 1 123 879 B1**
(45) Date of publication and mention of the grant of the patent: **25.05.2005**
(21) Application number: 99969394.8
(22) Date of filing: 21.09.1999
(51) Int. Cl.: B65G 1/00, B65G 47/52, B65G 37/00

(54) **AUTOMATIC WAREHOUSE**
AUTOMATISCHES LAGER
ENTREPOT AUTOMATIQUE

(30) Priority: 21.09.1998 ES 9801989
(43) Date of publication of application: 16.08.2001
(73) Proprietor: Sanches Gomez, Gines, 28932 Mostoles (ES)
(72) Inventor: Sanches Gomez, Gines, 28932 Mostoles (ES)
(86) International application number: PCT/ES1999/000298
(87) International publication number: WO 2000/017072

(56) References cited:
- US-A- 5 010 998
- US-A- 5 452 786
- PATENT ABSTRACTS OF JAPAN & JP 56 103 004 A (HITACHI, LTD) 17 August 1981
- PATENT ABSTRACTS OF JAPAN & JP 08 058 930 A (TOYOTA AUTOM LOOM WORKS LTD) 05 March 1996
- PATENT ABSTRACTS OF JAPAN & JP 08 295 409 A (KITO CORP.) 12 November 1996
- PATENT ABSTRACTS OF JAPAN & JP 09 020 404 A (TOYOTA AUTOM LOOM WORKS LTD) 21 January 1997
- PATENT ABSTRACTS OF JAPAN & JP 62 036 202 A (ASAHIYAMA SANGYO KK) 17 February 1987

## Description

It is a goods handling and warehousing system which is capable of being managed by computer, from the point of entry of the goods from suppliers to the point of issuance for delivery to customers, in the quantities ordered by same.

Automatic warehouses are known from documents such as JP-A-08295409, JP-A-62036202 or JP-A-09020404.

The operations that the goods have to undergo in the warehouse are basically storage, splitting and repacking the merchandise. These operations may be broken down into others, which will be outlined in the course of this description.

As regards the packs that are used in the stores, they may be reduced to the following three kinds: pallets (which contain boxes, usually protected by plastic banding), boxes (frequently cardboard) and packets, which are the fractions contained by the boxes. In many cases no specific type will be mentioned, as some operations and mechanisms are universal for all types. In any case it will be assumed, whatever the pack, that it is provided with a bar code label positioned suitably (e.g. in the case of pallets: on the base), which will enable both the goods and the pack to be identified.

The two basic types of cargo splitting operations are depalletizing of boxes on pallets and the emptying of these boxes into uniform fractions thereof (which will be called packets throughout the text).

As a conclusion to this introduction, in the disclosure reference will be made to many devices which are already common in goods handling and which are mentioned for purposes of clarity, although they are obviously not claimed. These include packers, lifting platforms, conveyor belts, roller conveyors, label readers, photoelectric cells, etc.

The methodology that will be followed will be description of the operations and basic systems, which are storage, palletized cargo splitting and box opening, to which positioners have to be added in view of the possible need to change the orientation of the loads for some operations. Within every one of these systems we will describe the parts into which it may be broken down. Lastly, various forms of interconnection will be indicated in order to obtain various types of automatic warehouses.

### STORAGE SYSTEM

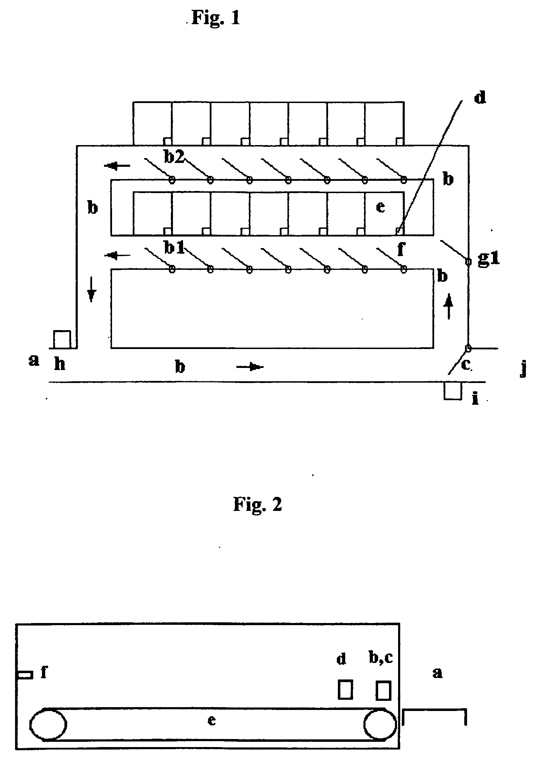

It is based on the diagram in figure 1. It comprises two basic stages: merchandise intake and withdrawal.

### Intake stage

This would be the system default operating system.

The goods enter at (a), passing by the label reader (h), either from a supplier or else from another part of the warehouse. They are placed on the first section of the circular conveyor belt (b) (in the drawing with spurs (b1) and (b2), although there could be as many belts as there is room for in the warehouse). At this stage the baffle (c) shuts off access to the exit, forcing the goods to continue on the conveyor belt (b).

Let us suppose that the storage bins (e) can hold various cargo units, although for reasons that will be seen in some of their designs every bin should hold only one type of merchandise.

If any bin of conveyor belt (b1) has an empty space for the goods to be stored, the baffle (g1) will block passage by the main conveyor belt (b) routing the merchandise towards (b1). All the baffles (f) of the bins (e) that have space will remain open, diverting the merchandise introduced towards the first bin with an empty space. When the cargo enters a bin, the bar code reader (d) that records entry is energized, it actuates the internal movement of the goods in the bin, and transmits input details to the computer: bin aisle number, bin number, type of goods, type of pack. If none of the bins (b1) had an empty space for the goods in question, the baffle (g1) would be closed, permitting passage to the next aisle until an empty space is found.

### Withdrawal stage

The computer will not enable this mode until it has completed any intake operation in progress, which it will detect because the sum of inputs at (h) is higher than the input at the bins (e), so input a should be shut off until withdrawal is completed.

Withdrawal is achieved by closing the baffle (c), which thereby permits the goods circulating on belt (b) to pass to the exit (j). When the bin with the right goods is given the order to discharge a unit, this is emptied onto (b), finally leaving by (j) after first passing in front of the bar code reader (i), which lets the computer know that the operation has been completed.

### Internal movements and making up orders

Always assuming that the system is governed by a computer, to consider the capacity of the bins, we will suppose that it has three series of variables: one in which the real total capacity is stored, another in which a total virtual capacity is stored, and lastly the contents of each bin, only taking into account for the operations the virtual capacity, which for instance for the intake stage will be zero for bins occupied by goods different from those that are to be stored, and the difference between the real total capacity and the occupancy for the goods to be stored.

The internal movements consist of the passage of goods from one given bin to another given bin.

For this purpose the withdrawal operation is performed and, as soon as the goods are out of the bin, an intake operation, zeroing all the virtual capacities of all the bins except that of the one to which we want to direct them.

For preparation of orders for customers, they will be considered to be made up on the actual storage system (which would mean that the warehouse space is utilized to full advantage).

The computer would first determine the number of bins that every client needs (rounding up) and reserve them, matching up with each order (one order=one client) the number of bins he needs, preferably at the last spurs of belt (b).

Afterwards, the computer proceeds to serve the orders by type of goods, i.e. the process that will be described below will be repeated as many times as there are types of goods to be served.

The computer orders the emptying of the merchandise from the bin, with the baffle (c) preventing issuance from (j) until the capacity of conveyor belt (b) is saturated, the bin is emptied, or else all the merchandise of the type in question are used up.

Immediately afterwards, it would give the intake order, with the virtual capacities of all the bins at zero, except those of the clients who have ordered this type of merchandise.

The operation that is started in the second preceding paragraph is repeated as often as necessary for a whole type of merchandise to be served.

Here we see the advisability (rather than the necessity) that only one type of merchandise should be stored at the pure intake stage as, if this were not the case and the type of merchandise needed were in a bin in the middle, it would be necessary to carry out internal movements to reposition the merchandise in place before they are needed. In addition, this would complicate the computer program.

An alternative to the above would be for the orders to be prepared in another "storage system", which would require space to be set aside permanently in the warehouse.

The mechanism would be the same except that the baffle (c) would no longer have to block off the exit and this should be connected at the entrance of the order preparation store.

Once all the orders are completed with all the goods, their withdrawal would then be ordered per client to the loading area, or to other handling processes (palletizing, repacking, labelling).

### Storage bins

### 1/ Horizontal configuration

It is diagrammed in figure n° 2.

### Goods entry:

The goods enter by (a), actuating the label reader (b), which was already mentioned in a previous point, and the photoelectric cell (c), which starts up the conveyor belt (e) in the inward direction. When the goods reach the other photoelectric cell (d), this stops the belt. At the end a safety stop (f) advises the computer that the bin is full, although the computer must already have its capacity stored in its memory, which is determined by the length of the conveyor belt (e) divided by the distance between the photoelectric cells (c) and (d).

### Goods departure:

The computer starts up the conveyor belt (e) in an outward direction, pushing the goods closest to the exit towards the conveyor belts external to the device. The actual bin halts the movement of the belt in the following way: when the photoelectric cell (c) ceases to detect the goods, after they pass in front (actuating it) of the label reader.

### Remark

Another alternative configuration to the above is that the goods should leave from the back, dropping onto another spur of belt (b) in figure 1. In this case, the bin should be open at the end, therefore not having switch (f) but having to be provided with another photoelectric cell that performs the same function as (c) at the exit.

### 2/ Vertical configuration

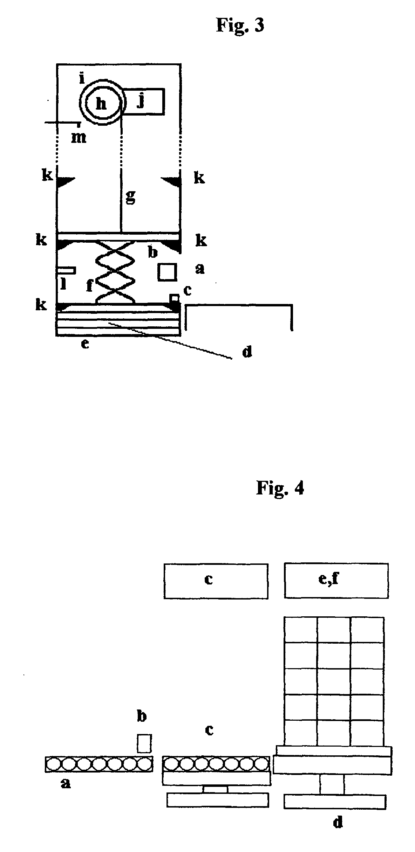

It is diagrammed in figure n° 3.

It has the form of a silo with four slip rails, not shown, along which the platforms (d) slide. When these are not occupied, they remain at rest in the pit (e). These platforms are joined together by way of extending unions (f).

### Goods entry:

The cargo enters via (a) and is detected by the label reader (b), which sets the entry stop (c) in place that holds back the load momentarily. At the same as the establishment of this stop (c) the motor (h) starts up that raises the platform by means of cable (g), until any of the latch type anchorages (k) is reached, shutting off the motor (they also act as switches). At the same time as the motor stops, stop (c) rises, permitting the entry of the goods, pushed by the outer belts, not shown, to the bin. When the cargo reaches the switch (l), the operation is terminated, placing the system on stand-by. When the bin is full, the top of the highest platform should actuate the bin filling stop (m), transmitting this information to the computer, although this should already know it through the number of platforms present in each pit.

### Goods departure:

A ram, not shown, situated on the same side as the switch (l), pushes the cargo outwards, until it touches the belt, this being what will carry the cargo along thereafter.

After a pre-set time as of when the label reader detects the passing of the cargo, anchorages (k) are released at the same time as brake (j) is applied to the braking wheel (i), enabling the cable to lower slowly. After a pre-set time, sufficient for the platforms to overrun the anchorages that were securing them, the anchorages are actuated again, halting the platforms at the lower stage.

### Remarks

The constitution of the conveyor belts has not been mentioned. These should naturally be suitable for the cargo. Thus, if this is on pallets, roller conveyors should be used. If in boxes or packets, more classic leather, plastic, canvas, etc. belt conveyors would be sufficient.

### DEPALLETIZER

It is assumed that the pallet is banded with plastic and that a label is attached to the pallet proper with the bar code that identifies the goods, the number of boxes and their arrangement on the pallet (dimensions, number of rows, height of each row, etc.).

The operations performed by the depalletizer are shown in diagrammatic form in figure 4 and are as follows:

The pallet is assumed to be placed on the roller conveyor (a), fitted at the end with a label reader (b). Once the pallet is placed on the roller conveyor, it is carried towards the debander (c). The reading taken by (b) is transmitted to the computer, which undertakes control of the operation. The debander consists of a roller platform, capable of transmitting via these rollers to the next stage. It will be described in greater detail later on.

Once debanded, the pallet is pushed towards the adjustable lifting platform (d). On this the pallet is raised row by row by the computer on the basis of the data that it possesses on it stored in its memory, so that each row is placed in front of the emptier (e), which pushes each row onto the belt (f). The emptier and the belt (f) (not shown) are situated on a plane transverse to the afore-mentioned items.

Not shown in the figure for the sake of clarity, the platform (d) should have an empty pallet ejector, perpendicular to the plane, and a conveyor that takes them to where they are needed (to the loading area, if they have to be returned to the supplier, or to the unloading area for re-use).

We describe below in greater detail the following items: debander (c), cutter for removing the banding plastic, the function of which will be described in the debander, and the pallet emptier (e).

### Debander

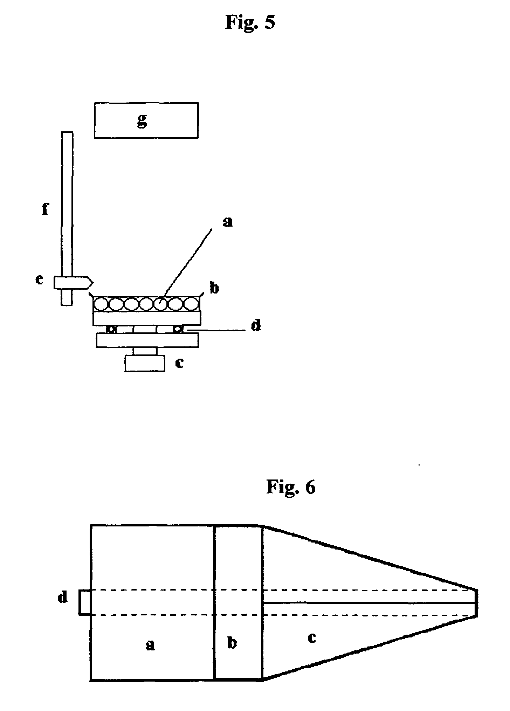

It is diagrammed in figure 5.

It is a roller platform (a), provided with anchorages (b) for securing the pallet. This platform can revolve under the action of the rotor (c), on the bearings (d). On one side is the vertical guide (f) along which a suitable cutter (e) for tearing the banding plastic, which will be described later, can slide.

There is an aspirator (g) on the platform.

Its operation would be as follows:

The pallet is secured to the platform (a) by the anchorages (b).

The cutter sinks into the base of the banding, i.e. at the bottom of the guide (f), while the platform begins to turn, so that the banding is broken at the base. When this is completed, the platform stops turning and resumes its initial position. The cutter slides up to the top of the guide, still sunk in the plastic, so that it breaks one side of it. Afterwards, it is lowered and retracts to be in position for the next pallet.

Finally, the aspirator (g) sucks up the plastic, now loose.

### Debanding cutter

It is diagrammed in figure 6.

It consists of a handle fixing it to the guide (a), a heater coil (b), the tetrahedral shaped cutter proper made of a soft metal (e.g. copper), the inner tube (d), which passes through the cutter.

The cutter penetrates and cuts the plastic more by the heat to which it is subjected by the heater coil than with its tip and edge. The temperature of the cutter should be midway between the melting point of the plastic and the combustion point of the packing of the boxes inside the pallet, otherwise this cutter could not be used.

The mechanism for the penetration of the cutter in the plastic would be housed in its handle and would consist of the relaxation of a spring with only force enough to pierce the plastic but not the box pack.

Coinciding with penetration, air or nitrogen (if there is risk of combustion) would be injected through the hole (d) in order to assist the separation of the plastic from the goods.

### Pallet emptier

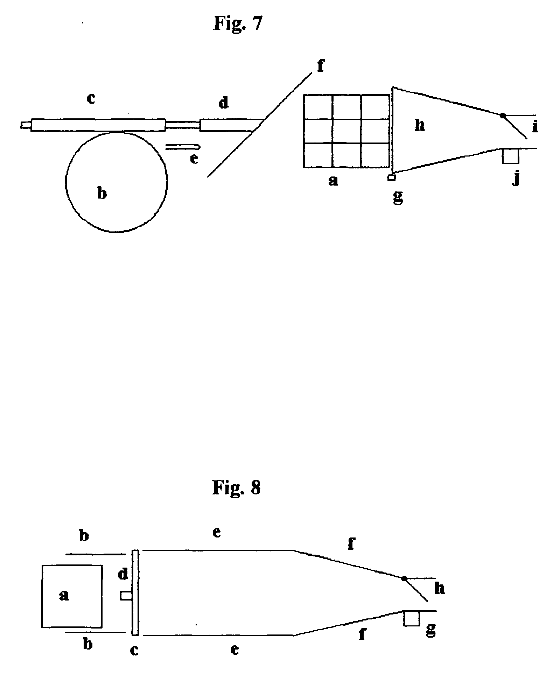

It is diagrammed in figure n° 7.

A cog wheel moved by a motor (b) acts on the internally threaded worm screw (c), to which a shaft is fitted that pushes the shovel (f) against the top row of the pallet (a). The shaft ends in a spring (d), so that when there is a blockage that holds back the shovel, the shaft continues moving forward until it actuates the switch (e), which would stop the motor (b) until the spring (d) relaxes again.

The shovel (f) pushes the last row of the pallet onto the vibrator belt (h) until it comes up against the switch (g), which would invert the direct of travel of the motor (b), withdrawing the shovel to its starting position, which enables the lift to raise the pallet one more row in order to begin a fresh cycle.

The function of the vibrator belt (h) is to prevent blockages.

When a box passes by the photoelectric cell (j), it closes the gate (i) for a pre-set time, sufficient to achieve a certain spacing between two consecutive boxes.

### Depalletizer manual and automatic control

As in the case of the storage system, the depalletizer is presumed to be controlled by a computer. Otherwise considerable automation may be achieved per type of goods, for which purpose the key item is the pallet lift. All the other components can achieve automatic movement sequences with the afore-mentioned switches and label readers, besides a system that blocks the entry of pallets until an operation is terminated.

The pallet lift should be capable of rising an initial height (that required to bring the top of the pallet up flush with the conveyor belt (h) in figure 7) and fixed steps, governed by a counter, the maximum value of which would be the number of rows on the pallet. These are precisely the data that have to appear on the control panel.

### BOX EMPTIER

Part of the mechanisms are shown diagrammatically in figure n° 8. The rest are simply described as drawing them would only confuse the illustration and the description. All the mechanisms have to be situated on a conveyor belt.

When the computer orders the energizing of the box emptier, the first thing this does is to lower the stop (c), provided with a switch (d) that advises the system of the impact of a box against it and stops it. When this happens, the two clamp shovels (b) lower that raise the box just enough to permit the attachment of two suckers under it, which pull the bottom of the box, allowing a cutter to pass in between, which slits the bottom without damaging the goods it contains. The box is then slowly raised, allowing the packets inside to drop onto the belt by gravity. The vibrating bars (e) prevent jams, while the narrowing bars (f) (also vibrating) channel the goods.

When the photoelectric cell (g) detects the passing of a packet, it closes the gate (h), so that the packets may leave the device evenly spaced, in a similar way to the end section of the depalletizer.

When the photoelectric cell counts the number of packets that the box contains (which the computer knows by its bar code), the clamp shovels withdraw the empty box from the circuit and set the device on stand-by.

If gravity is not sufficient to remove the packets due to the type of pack, the box should be opened at the top (in the same way as the bottom) and the load pushed down slowly.

### POSITIONER

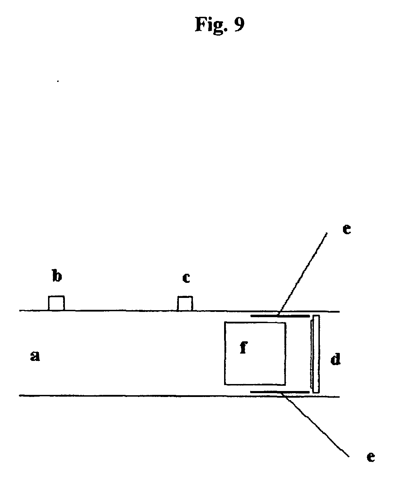

It is diagrammed in figure n° 9.

The cargo moves along the conveyor belt (a). On passing by the photoelectric cell (b), the bar with a switch (d) lowers. When the cargo passes by the label reader (c), this records a reading, the bar with switch (d) rises, the device is placed on stand-by and the cargo moves on, as the fact of the reading indicates that the merchandise is in the correct position.

Otherwise, when the merchandise comes up against the bar (d), it is momentarily held back, the clamp shovels (e) that hold the merchandise (f) are actuated and raise it, turning it through 90 degrees (in either direction providing that it is the same), and they deposit it again in front of the photoelectric cell (b),setting the system on stand-by again.

Positioning is only considered in the belt plane dimension, as it is not deemed necessary to do so in other dimensions because the starting merchandise, assumed to be on pallets, is presumed to be positioned properly on the same plane and all the handling operations mentioned in this text take place on the plane of a belt.

### PREFERRED EMBODIMENT OF AN AUTOMATIC WAREHOUSE

The aforesaid interconnection of the devices and others that have been mentioned, either by means of conveyor belts or other means (such as for instance automatically guided dollies) may give rise to a fully automatic warehouse where the goods enter at one end and the goods are obtained at the other, now arranged in customer orders at the exit to the warehouse.

Different needs or economic resources available may give rise to different configurations.

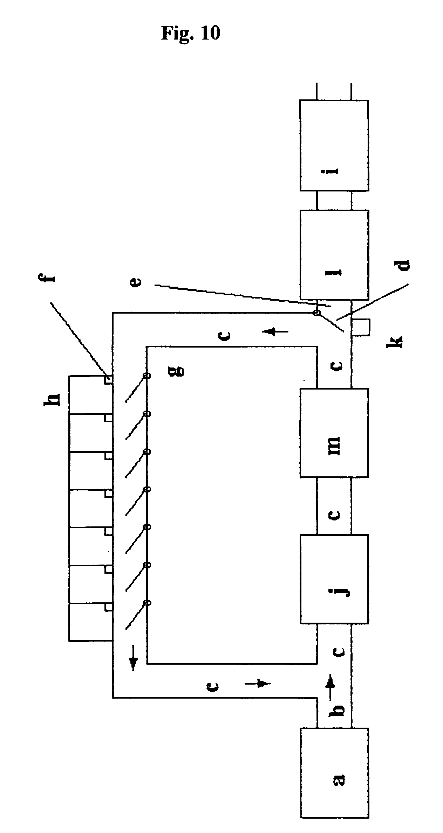

A minimum configuration would be that represented in figure 10. In this the goods would enter via the depalletizer (a) and exit to conveyor belt (b), which would transfer them to the conveyor belt circuit (c), on which would be placed the box opener (j), the positioner (m) and the storage bins (h), where they would be mass stored in boxes. The orders would be made up in boxes and packets, which would be stored provisionally as boxes, departing via baffle (d) for the packer (l) and palletizer (i) and from there to dispatch to the customer. The label reader (k) would detect whether it is a case of packets or boxes, either starting up or shutting off the packer (l) according to its reading.

## Claims

1. Automatic warehouse for packed goods, provided with bar code or magnetic labels, capable of being controlled by computer in all its operations and of carrying out all the movements required by the goods from their intake in pallets to their outlet in pallets, boxes o packets to the customers, the automatic warehouse comprising a closed circuit conveyor belt (10c,1b,1b1), capable therefore of carrying any merchandise along its mechanisms, on the aforesaid conveyor belt (10c,1b,1b1) being located the following components: a belt's entrance (10b,1a) preceded by a depalletizer (10a) for unstacking the pallets into boxes, a belt's exit (10e,1j) followed by a packer (10l) and a palletizer (10i), a box emptier (10j), a positioner (10m) and storage bins (10h,1e), each of which may hold one or more units of cargo and may be arranged in said closed belt or in various spurs branching off (1b2) from said closed belt, in order to guide the merchandise to the exit and to storage bins, baffles being provided in front of the belt's exit (10d,1c), in front of each bin (10g,1f) and in front of the conveyor belt circuit spurs (1g1), the automatic warehouse further comprising label readers at the entrance (1h), the belt's exit (10k,1i) and at the entry to each bin (10f,1d).

2. Automatic warehouse according to claim 1, **characterized in that** the storage bins (1e) have a horizontal configuration storing various units of cargo, the bin extending perpendicular to the storage system conveyor belt (2a) and having an inner conveyor belt (2e), a label reader (2b) at the input, two photoelectric cells at the input (2c,2d), and a limit switch at the end of the bin (2f), such that as the merchandise enters, the first photoelectric cell (2c) activates an engine causing the bin belt (2e) to rotate inwards, whereas the second cell (2d) stops it, while in order to release the merchandise out of the bin, the control computer causes the bin belt (2e) to rotate outwards ("actuate the bin") until the first photoelectric cell (2c), located at the intake, does not detect any more merchandise.

3. Automatic warehouse according to claim 2, **characterized in that** the storage bin having the inner conveyor belt (2e), the label reader (2b) at the input, the two photoelectric cells at the input (2c,2d), an output on the back, the merchandise exits by starting up a conveyor belt motor which rotates in one sense.

4. Automatic warehouse according to claims 1 or 2, **characterized in that** the storage bins (1e) have a vertical configuration storing various units of cargo, the bin having the form of a silo, with a pit (3e), where various platforms (3d) are stored joined together by flexible links (3f), so that they are kept folded, from the input level and regularly spaced all the way up the silo there being latch type anchorages (3k) which also act as switches, a tier-by-tier elevator for the platforms, pistons for taking in and out the merchandise, and a stop switch (3c), as the merchandise comes in the elevator is activated and the stop switch is taken down, the anchorages are used to stop the elevator and then the stop switch is removed, in order to release the merchandise out of the bin the computer activates the exit piston ("actuates the bin") while the platforms are taken down carefully.

5. Automatic warehouse according to claim 1, **characterized in that** the depalletizer has a roller conveyor (4a), a label reader (4b), a debander (4c), a adjustable lifting platform (4d) and a pallet emptier (4e), the adjustable lifting platform (4d) being controlled by the computer at function from the label reader (4b).

6. Automatic warehouse according to claim 5, **characterized in that** the debander (4c) is suitable for removing the banding from a pallet, which usually consists of a film of plastic covering the merchandise, the debander having a rotating roller platform (5a) for pallet movement, provided with retaining anchorages (5b), a cutter (5e) mounted on a vertical guide (5f), and an aspirator (5g) situated at the top, such that the cutter tears the band being then sucked up by the aspirator.

7. Automatic warehouse according to claim 6, **characterized in that** it comprises a debanding cutter (5e) penetrating and separating the plastic from the merchandise, by tearing the former without affecting the latter, the cutter having a tetrahedral shape being of a soft material as copper, and being pierced by a hole (6d) running its entire length for injecting air or nitrogen if there is risk of fire, to separate the banding plastic from the merchandise, cutter having a heating coil (6b) that brings it up to a temperature midway between the melting point of the band and the combustion point of the merchandise packing, penetrating the band plastic by heat, pressed by a spring (6a) that joins the cutter to the guide (5f) on which it moves.

8. Automatic warehouse according to claim 5, **characterized in that** the pallet emptier (4e) is suitable for placing the last row of boxes of a pallet on a conveyor belt, with the merchandise in evenly spaced boxes by action of a photoelectric cell (7j) and a gate (7i), the pallet emptier having a shovel (7f) at an angle of 45° to the last pallet row (7a), for pushing the merchandise towards a vibrating belt (7h), prevent blockages, the shovel (7f) being actuated by a shaft to which is connected by a spring (7d), the shaft by an internally threaded coaxial worm screw (7c), and the worm screw by a motor and a cog wheel (7b), the automatic warehouse futher comprises a blockage switch (7e) which is actuated when the spring (7d) is compressed a given length, stopping the motor, and another row emptying switch (7g), which turn the motor in the opposite direction and pass instructions to the lift platform (4d) so that it raises another pallet row.

9. Automatic warehouse according to claim 1, **characterized in that** the box emptier is mounted on a conveyor belt, it has a stop (8c) that holds back the box, provided with a switch (8d), which, when actuated, causes two shovels (8b), positioned initially on either side of the belt, to lower, clamping the box (8a) and raising it sufficiently for two suckers to pass underneath that pull the wrapper slightly and make it protrude, a cutter at box level slits open this protrusion, the two shovels (8b) rises slowly, emptying out the packets by gravity.

10. Automatic warehouse according to claim 9, **characterized in that** if gravity were not sufficient to make the packets drop out, the box emptier has at its top another pair of suckers and cutter to open each box, and a ram to push the packets down.

11. Automatic warehouse according to claim 1, **characterized in that** the positioner has a photoelectric cell (9b) that detects the passing of merchandise and a label reader (8c), such that if the latter detects the passing of merchandise in an interval of time from when it was detected by the photoelectric cell, then the merchandise is positioned properly and it continues on its way, and if no reading takes place, the next positioning mechanism is actuated and **in that** it further has a stop (9d), provided with a switch that is energized on impact with the merchandise, for blocking the conveyor belt such that two shovels (9e) then grip the merchandise and turn it 90° in a set direction, depositing it in front of the photoelectric cell (9b).

## Patentansprüche

1. Automatisches Lager für verpackte, mit Barcodes oder Magnetetiketten versehener Ware, die bei allen Operationen vom Computer gesteuert wird und wo der gesamte notwendige Warenverkehr ab deren Eingang in Paletten, Kisten oder Kleinverpackungen für die Kunden erfolgt. Das automatische Lager umfasst ein geschlossenes Transportband (10c,1b,1b1), das demzufolge in der Lage ist, jede Art von Ware über seine Mechanismen auf dem genannten Transportband (10c,1b,1b1) zu transportieren, wobei am Band (10b,1a) eine Zuführung angeordnet ist, der ein Entpalettierer (10a) zur Umsetzung der Paletten in Kisten vorgelagert ist, eine Ausgabe des Bandes (10e,1j) der ein Verpackungsapparat (10l) folgt und ein Palettierer (10i), einen Kistenentleerer (10j), eine Positioniereinrichtung (10m) und Einlagerungsfächer (10h,1e), wo jedes eine oder mehrere Ladeeinheiten enthalten kann und auf besagtem geschlossenen Transportband oder auf mehreren Abzweigungen (1b2) des besagten geschlossenen Transportbandes angeordnet sein kann. Um die Ware zur Ausgabe und zu den Einlagerungsfächern zu führen, werden Deflektoren vor dem Ausgangs des Bandes (10d,1c), vor jedem Einlagerungsfach (10g,1f) und vor den Abzweigungen (1g1) vorgesehen. Ausserdem umfasst das automatische Lager Etikettenleser an der Zuführung des geschlossenen Transportbandes (1h), an der Ausgabe des geschlossenen Transportbandes (10k,1i) und am Eingang jedes Einlagerungsfaches (10f,1d).

2. Automatisches Lager nach Anspruch 1, **dadurch gekennzeichnet, dass** jedes Einlagerungsfach (1e) eine horizontale Ausführung aufweist und verschiedene Ladeeinheiten einlagert, das Einlagerungsfach sich senkrecht zum geschlossenen Transportband (2a) erstreckt und ein internes Transportband (2e), einen Etikettenleser (2b) am Eingang, zwei photoelektrische Zellen am Eingang (2c,2d), und einen Pufferschalter am Ende des Faches (2f) aufweist, so dass beim Eintreffen der Ware, die erste photoelektrische Zelle (2c) einen Motor aktiviert, der bewirkt, dass das interne Transportband (2e) nach innen schwenkt, während die zweite photoelektrische Zelle (2d) des besagten internen Transportbandes zum Erfassen der Ware ausserhalb des Einlagerungsfaches wirkt und der zur Kontrolle eingesetzte Computer bewirkt, dass das interne Transportband (2e) nach aussen schwenkt ("Aktivierung des Faches") bis die erste photoelektrische Zelle (2c), die am Eingang angeordnet ist, die Ware nicht mehr erkennt.

3. Automatisches Lager nach Anspruch 2, **dadurch gekennzeichnet, dass** das Einlagerungsfach über das interne Transportband (2e), den Etikettenleser am Eingang (2b) und am Ausgang, die beiden photoelektrischen Zellen am Eingang (2c,2d), einen Ausgang am Ende des besagten internen Transportbandes verfügt, wo die Ware austritt und dabei den Motor des internen, nur in eine Richtung laufenden Transportbandes in Betrieb setzt.

4. Automatisches Lager nach den Ansprüchen 1 oder 2, **dadurch gekennzeichnet, dass** die Einlagerungsfächer (1e) eine vertikale Ausführung aufweisen, mehrere Ladeeinheiten einlagern, jedes Fach die Form eines Silos hat, mit einer Grube (3e) in der mehrere Plattformen (3d) lagern, mit zueinander flexiblen Verbindungen (3f), die sich im gekrümmten Zustand aufrechterhalten, ab erster Ebene und im regelmässig Abstand längs des Silos gibt es Verankerungen der Art einer Verriegelung (3k), die auch als Schalter wirken, einen Aufzug, der von Ebene zu Ebene der Plattformen fährt, Schubvorrichtungen zum Einbringen und Herausnehmen der Ware und einen Puffer (3c); wenn die Ware eintrifft, ist der Aufzug aktiviert und der Puffer gesenkt, die Verankerungen stoppen den Aufzug und der Puffer wird angehoben, solange der Computer gemäss der Warenaufnahme den Kolben des Ausgangs aktiviert ("Fach aktivieren") und die Plattformen sorgsam gesenkt werden.

5. Automatisches Lager nach Anspruch 1, **dadurch gekennzeichnet, dass** der Entpalettierer ein Rollen-Transportband (4a), einen Etikettenleser (4b), einen Umhüllungsentferner (4c), eine einstellbare Hebebühne (4d) und einen Palettenentleerer (4e) umfasst, wobei die einstellbare Hebebühne (4d) vom Computer in Funktion des Etikettenlesers (4b) gesteuert wird.

6. Automatisches Lager nach Anspruch 5, **dadurch gekennzeichnet, dass** der Umhüllungsentferner (4c) dazu geeignet ist, die Umhüllung einer Palette zu entfernen, die gewöhnlich aus einer Plastikumhüllung besteht, wobei der Umhüllungsentferner eine drehende Plattform (5a) besitzt, um die Palette zu bewegen, die mit Verankerungen (5b), einem auf einer vertikalen Führungsschiene (5f) montierten Messer des Umhüllungsentferners (5e) und einem in der Höhe angeordnetem Absauggerät (5g) ausgestattet ist, so dass das Messer des Umhüllungsentferners die Umhüllung greift und diese von dem Absauggerät abgesaugt wird.

7. Automatisches Lager nach Anspruch 6, **dadurch gekennzeichnet, dass** es ein Messer des Umhüllungsentferners (5e) umfasst, das in den Plastikverbund der Ware greift und diesen schneidet, indem es den Plastikverbund einritzt, ohne die Ware zu beschädigen, wobei das Messer des Umhüllungsentferners eine vierflächige Form aufweist und aus einem weichen Material, wie Kupfer, besteht, und mit einer Bohrung (6d) versehen ist, die sich über dessen gesamten Länge erstreckt, um bei Brandgefahr Luft oder Stickstoff einzugeben. Zum Entfernen der Warenumhüllung besitzt das Messer des Umhüllungsentferners eine Heizspirale (6b), die die Temperatur auf einen Durchschnittswert zwischen dem Umhüllungsschmelzpunkt und dem Verbrennungspunkt der Warenverpackung anhebt, wobei es, von einer Feder (6a) angetrieben, die das Messer mit der Führungsschiene (5f) in der es sich bewegt, verbindet, in die Plastikumhüllung mittels Wärme eintritt.

8. Automatisches Lager nach Anspruch 5, **dadurch gekennzeichnet, dass** der Palettenentleerer (4e) aufgrund des Wirkens einer photoelektrischen Zelle (7j) und einer Tür (7i) dazu geeignet ist, die letzte Kistenreihe einer Palette auf einem Transportband mit im gleichmässigen Abstand verteilten Kisten anzuordnen, wobei der Palettenentleerer eine Schaufel (7f) in einem Winkel von 45° zur letzten Palettenreihe (7a) aufweist, um die Ware auf ein vibrierendes, Stauungen vorbeugendes Transportband (7h) zu schieben, wobei die Schaufel (7f) von einer Achse aktiviert wird mit der sie durch eine Feder (7d) verbunden ist, wobei die Achse von einer koaxialen Schnecke (7c) und die Schnecke von einem Motor und einem Zahnrad (7b) angetrieben wird. Das automatische Lager umfasst ausserdem einen Schalter für Stauungen (7e), der aktiviert wird, wenn die Feder (7d) auf eine gewisse Länge zusammengedrückt wird, wobei der Motor angehalten wird, sowie einen weiteren Schalter für leere Reihen (7g), der den Motor in entgegengesetzter Richtung bewegt und der Hebebühne (4d) Instruktionen zum Anheben einer weiteren Palettenreihe erteilt.

9. Automatisches Lager nach Anspruch 1, **dadurch gekennzeichnet, dass** der Kistenentleerer auf einem Transportband angeordnet ist, das Transportband einen Puffer (8c) aufweist, der die Kiste anhält, der Puffer mit einem Schalter (8d) versehen ist, der bei Aktivierung bewirkt, dass zwei Schaufeln (8b), die anfangs auf beiden Seiten des Transportbandes angeordnet werden, die Kiste (8a) beim Absenken fixieren und sie soweit anheben, dass zwei Saugknöpfe unter die Kiste fahren, an deren Deckel leicht ziehen und bewirken, dass er vorsteht, ein Messer gleitet unter der Kiste auf den Vorsprung und öffnet die Kiste, dann die beiden Schaufeln (8b) langsam angehoben werden und die Kiste mittels Schwerkraft entleert wird.

10. Automatisches Lager nach dem Anspruch 9, **dadurch gekennzeichnet, dass** für den Fall, dass nicht genügend Schwerkraft vorliegen sollte, der Kistenentleerer noch ein weiteres Saugpaar zum Absenken der Kiste, ein weiteres Messer, um jede Kiste zu öffnen sowie eine Schiebevorrichtung zum Schieben der Kisten nach unten, aufweist.

11. Automatisches Lager nach Anspruch 1, **dadurch gekennzeichnet, dass** der Positionierer eine photoelektrische Zelle (9b) aufweist, die den Warenlauf erkennt sowie eine Etiketten-Lesevorrichtung (8c), so dass, wenn die Etiketten-Lesevorrichtung den Warenlauf in einem Zeitabstand, ab dem sie von der photoelektrischen Zelle registriert wurde, erkennt, die Ware als ordnungsgemäss positioniert ansieht und diese ihren Lauf nimmt, und wenn bei der Etiketten-Lesevorrichtung kein Ablesen stattfindet, der Positioniermechanismus aktiviert wird, der sich aus einem mit einem Schalter versehenen Puffer (9d) zusammensetzt, der durch das starke Aufsetzen der Ware aktiviert wird, wobei besagter Puffer das Transportband solange blockiert, bis zwei Schaufeln (9e) die Ware greifen, diese um 90° in eine bestimmte Richtung schwenkt und vor die photoelektrische Zelle (9b) absetzt.

## Revendications

1. Magasin automatique de marchandise emballée dotée de codes-barres ou d'étiquettes magnétiques, susceptible d'être contrôlé par ordinateur dans toutes ses opérations et de réaliser tous les mouvements requis par les marchandises depuis leur entrée en palettes, en caisses ou en caissettes, jusqu'aux clients , le magasin automatique comprend une bande transporteuse fermée (10c,1b,1b1), capable donc de transporter n'importe quelle marchandise le long de ses mécanismes, et sur ladite bande transporteuse (10c,1b,1b1) sont situés une entrée à la bande (10b,1a) précédée d'un dépalettiseur (10a) pour transformer les palettes en caisses, une sortie de la bande (10e,1j) suivie d'une emballeuse (10l) et d'un palettiseur (10i), un videur de caisses (10j), un positionneur (10m) et des casiers d'entreposage (10h,1e), chacun desquels pouvant contenir une ou plusieurs unités de chargement et être disposé sur cette bande transporteuse fermée ou sur plusieurs dérivations (1b2) de cette bande transporteuse fermée, pour guider la marchandise vers la sortie et vers les casiers d'entreposage, des déflecteurs sont disposés face à la sortie de la bande (10d,1c), en face de chaque casier d'entreposage (10g,1f) et en face des dérivations (1g1), le magasin automatique comprend aussi des lecteurs d'étiquettes à l'entrée de la bande transporteuse fermée (1h), à la sortie de la bande transporteuse fermée (10k,1i) et à l'entrée de chaque casier d'entreposage (10f,1d).

2. Magasin automatique conformément à la revendication 1, **caractérisé en ce que** chaque casier d'entreposage (1e) est de configuration horizontale et stocke plusieurs unités de chargement, le casier d'entreposage s'étend perpendiculairement à la bande transporteuse fermée (2a), possédant une bande transporteuse interne (2e), un lecteur d'étiquettes (2b) à l'entrée, deux cellules photoélectriques à l'entrée (2c,2d) et un interrupteur de butée à la fin du casier (2f), de sorte que lorsque la marchandise entre, la première cellule photo-électrique (2c) active un moteur qui fait tourner vers l'intérieur la bande transporteuse interne (2e), tandis qu'au moyen de la deuxième cellule photoélectrique (2d) pour cette bande transporteuse, pour récupérer la marchandise hors du casier d'entreposage, l'ordinateur de contrôle fait que la bande transporteuse interne (2e) tourne vers l'extérieur ("activer le casier ") jusqu'à ce que la première cellule photoélectrique (2c) située à l'entrée ne détecte pas de marchandise.

3. Magasin automatique conformément à la revendication 2, **caractérisé en ce que** le casier d'entreposage possède la bande transporteuse interne (2e), le lecteur d'étiquettes à l'entrée (2b) et à la sortie, les deux cellules photoélectriques à l'entrée (2c,2d), une sortie à la fin de chaque bande transporteuse interne, la marchandise sort en activant le moteur de la bande transporteuse interne, qui ne tourne que dans un sens.

4. Magasin automatique conformément aux revendications 1 ou 2, **caractérisé en ce que** les casiers d'entreposage (1e) sont de configuration verticale et stockent plusieurs unités de chargement, chaque casier ayant la forme d'un silo, avec une fosse (3e) où plusieurs plates-formes (3d) sont entreposées, avec des raccords souples (3f) entre elles, maintenues repliées, à partir du premier niveau et régulièrement espacées le long du silo, il existe des ancrages de type verrou (3k) qui agissent aussi comme interrupteurs, un élévateur étage à étage pour les plates-formes, des poussoirs pour entrer et sortir la marchandise et une butée (3c) , lorsque les marchandises arrivent, l'élévateur est activé et la butée est baissée, les ancrages stoppent l'élévateur et la butée est alors levée, tandis que pour récupérer la marchandise, l'ordinateur active le piston de sortie ("activer le casier ") tandis que les plates-formes sont baissées avec précaution.

5. Magasin automatique conformément à la revendication 1, **caractérisé en ce que** le dépalettiseur possède une bande transporteuse à rouleaux (4a), un lecteur d'étiquettes (4b), une machine à défilmer (4c), une plate-forme élévatrice réglable (4d) et un videur de palettes (4e), la plate-forme élévatrice réglable (4d) étant contrôlée par l'ordinateur en fonction du lecteur d'étiquettes (4b).

6. Magasin automatique conformément à la revendication 5, **caractérisé en ce que** la machine à défilmer (4c) est adéquate pour l'élimination du banderolage d'une palette, qui consiste habituellement en un film plastique recouvrant la marchandise, la machine à défilmer possédant une plate-forme tournante (5a) pour le mouvement de la palette, pourvue d'ancrages (5b), d'une lame arrache-film (5e) montée sur une glissière verticale (5f) et d'un aspirateur (5g) situé en hauteur de sorte que la lame arrache-film coupe le film qui est aspiré par l'aspirateur.

7. Magasin automatique conformément à la revendication 6, **caractérisé en ce qu'**il comprend une lame arrache-film (5e) pénétrant et retirant le film plastique de la marchandise, en coupant le plastique sans toucher la marchandise, la lame arrache-film étant de forme tétraédrique et fabriquée dans un matériau mou tel que du cuivre, et perforée d'un trou (6d) qui parcourt toute sa longueur pour injecter de l'air, ou de l'azote s'il y a risque d'incendie, pour retirer le banderolage de la marchandise, la lame arrache-film ayant une spirale chauffante (6b) qui élève la température à une valeur moyenne située entre le point de fusion de la machine à défilmer et le point de combustion de l'emballage de la marchandise, le film plastique pénétrant par la chaleur, poussée par un ressort (6a) qui raccorde la lame à la glissière (5f) dans laquelle elle se meut.

8. Magasin automatique conformément à la revendication 5, **caractérisé en ce que** le videur de palettes (4e) est adéquat pour disposer la dernière rangée de caisses d'une palette sur une bande transporteuse avec les caisses uniformément espacées les unes des autres sur l'action d'une cellule photoélectrique (7j) et d'une porte (7i), le videur de palettes possédant une pelle (7f) sur un angle à 45° par rapport à la dernière rangée de la palette (7a) pour pousser la marchandise sur une bande transporteuse vibrante (7h) pour empêcher tous blocages, la pelle (7f) étant activée par un axe auquel elle est raccordée à travers un ressort (7d), l'axe étant activé par une vis sans fin coaxiale (7c), et la vis sans fin par un moteur et une roue dentée (7b), le magasin automatique comprend aussi un interrupteur de blocage (7e) qui est activé lorsque le ressort (7d) est comprimé sur une certaine longueur, en arrêtant le moteur, et un autre interrupteur de rangée vide (7g), qui fait tourner le moteur dans le sens contraire et donne des instructions à la plate-forme élévatrice (4d) pour élever une autre rangée de la palette.

9. Magasin automatique conformément à la revendication 1, **caractérisé en ce que** le videur de caisses est monté sur une bande transporteuse , la bande transporteuse possède une butée (8c) qui stoppe la caisse, la butée étant pourvue d'un interrupteur (8d), qui, lorsqu'il est activé, fait que deux pelles (8b), initialement positionnées des deux côtés de la bande transporteuse, en baissant, tiennent la caisse (8a) et l'élèvent suffisamment pour que deux ventouses passent au-dessous de la caisse et tirent sur son couvercle léger pour le faire ressortir, une lame se glisse sous la caisse au niveau de la protubérance et ouvre la caisse, alors les deux pelles (8b) s'élèvent lentement, vidant les caissettes par gravité.

10. Magasin automatique conformément à la revendication 9, **caractérisé en ce que** si la gravité n'était pas suffisante pour faire descendre les caissettes, le videur de caisses possède une autre paire de ventouses et une autre lame pour ouvrir chaque caisse et un poussoir pour pousser les caissettes vers le bas.

11. Magasin automatique conformément à la revendication 1, **caractérisé en ce que** le positionneur possède une cellule photoélectrique (9b) qui détecte le passage de marchandises et un lecteur d'étiquettes (8c), de telle sorte que si le lecteur d'étiquettes détecte le passage de marchandise dans un intervalle de temps depuis sa détection par la cellule photoélectrique, alors la marchandise est bien positionnée et poursuit son chemin et si aucune lecture n'a lieu sur le lecteur d'étiquettes, est activé le mécanisme de positionnement composé d'une butée (9d) pourvue d'un commutateur qui est activé par l'impact avec la marchandise, cette butée bloque la bande transporteuse jusqu'à ce que deux pelles (9e) saisissent la marchandise et la tournent à 90° dans un sens déterminé, en la déposant face à la cellule photoélectrique (9b).
